# EUROPÄISCHE PATENTANMELDUNG

(11) **EP 3 171 095 A1**
(43) Veröffentlichungstag der Anmeldung: **24.05.2017**
(21) Anmeldenummer: 16189620.4
(22) Anmeldetag: 20.09.2016
(51) Int. Cl.: F24J 2/04, F24J 2/46

(54) **SOLARKOLLEKTOR-DACHINTEGRATIONSEINRICHTUNG SOWIE VERFAHREN ZUM MONTIEREN EINES SOLARKOLLEKTORS**

(30) Priorität: 19.11.2015 DE 102015222840
(71) Anmelder: ROBERT BOSCH GMBH, 70442 Stuttgart (DE)
(72) Erfinder: Otting, Herbert, 49832 Beesten (DE)

(57) **Zusammenfassung**

Die Erfindung betrifft eine Solarkollektor-Dachintegrationseinrichtung (2) für eine Montage eines thermischen oder elektrischen Solarkollektors in einem Dach (3), mit wenigstens einem Eindeckbauteil (22) und wenigstens einem Seiteneindeckbauteil (26), welche derart ausgebildet sind, dass bei einer Montage der Solarkollektor-Dachintegrationseinrichtung (2) im Dach (3), ein Längsendabschnitt des Eindeckbauteils (22) und ein Längsendabschnitt des Seiteneindeckbauteils (26) einen Eckenbereich (21) eines Eindeckrahmens (20) definieren, wobei das Eindeckbauteil (22) und das Seiteneindeckbauteil (26) mittels eines Eckverbinders (24) im Eckenbereich (21) des Eindeckrahmens (20) mechanisch gekoppelt miteinander verbindbar sind.

Ferner betrifft die Erfindung ein Verfahren zum Montieren eines thermischen oder elektrischen Solarkollektors in einem Dach (3) mit Hilfe eines Eindeckrahmens (20), wobei in einem ersten Schritt der Eindeckrahmen (20) im Dach (3) platziert, in einem zweiten Schritt der Eindeckrahmen (20) im Dach (3) ausgerichtet und in einem dritten Schritt der Eindeckrahmen (20) im Dach (3) befestigt wird.

Des Weiteren betrifft die Erfindung einen Solarkollektor oder eine Solarkollektoranlage zur Wärmeerzeugung oder Stromerzeugung.

## Beschreibung

Die Erfindung betrifft eine Solarkollektor-Dachintegrationseinrichtung für eine Montage eines thermischen oder elektrischen Solarkollektors in einem Dach. Ferner betrifft die Erfindung ein Verfahren zum Montieren eines thermischen oder elektrischen Solarkollektors in einem Dach mit Hilfe eines Eindeckrahmens. Des Weiteren betrifft die Erfindung einen Solarkollektor oder eine Solarkollektoranlage zur Wärmeerzeugung oder Stromerzeugung.

### Stand der Technik

Angesichts steigender Preise für fossile Energieträger und einer schwindenden Akzeptanz von Atomenergie kommt einer Nutzung regenerativer Energien in Zukunft eine wachsende Bedeutung zu. So nutzt eine thermische Solarkollektoranlage die Sonnenenergie zur Wärmeerzeugung z. B. für eine Warmwasserbereitung und wahlweise auch zur Heizungsunterstützung, wobei solche Anlagen energiesparend und umweltschonend sind. Dies spart wertvolle Brennstoffe ein und schont die Umwelt durch weniger Schadstoffemissionen. In einer thermischen Solarkollektoranlage kann nicht nur eine direkte Sonnenstrahlung in Wärme umgesetzt werden, sondern auch die diffuse Sonnenstrahlung ist nutzbar. So wirken an trüben Tagen mit einem hohen Anteil an diffusem Licht noch bis zu 300 W/m² auf ein Kollektormodul der Solarkollektoranlage.

Eine Warmwasserbereitung ist eine naheliegende Anwendung für eine solche Anlage. Ein über das gesamte Jahr hinweg im Wesentlichen konstanter Warmwasserbedarf ist gut mit einem solaren Energieangebot kombinierbar. Im Sommer lässt sich der Energiebedarf für die Warmwasserbereitung nahezu vollständig von der Solarkollektoranlage abdecken. Ferner kann eine solche Anlage auch für eine Heizungsunterstützung angewendet werden. Ideal hierfür sind großflächige Heizkörper mit niedrigen Systemtemperaturen oder Fußbodenheizungen. Bei entsprechender Auslegung deckt die Solarkollektoranlage einen nicht geringen Anteil der benötigten Gesamt-Jahreswärmeenergie für eine Warmwasserbereitung und eine Heizung ab. - Natürlich finden auch elektrische Solarkollektoranlagen eine Anwendung.

Ein Solarkollektor mit einem einzigen Kollektormodul oder eine Mehrzahl von Kollektormodulen eines Solarkollektors einer Solarkollektoranlage kann bzw. können in ein Dach integriert sein. Hierbei kann der Solarkollektor bei einer Montage des Dachs oder auch nachträglich in das Dach integriert werden. - Hierfür existieren unterschiedliche Dachintegrationseinrichtungen, wobei die meisten Einrichtungen darauf beruhen, dass der Solarkollektor einerseits auf dem Dach befestigt und andererseits mit einer Dachintegration beplankt wird. Ein Nachteil ist hier ein vergleichsweise hoher Montageaufwand und eine vergleichsweise hohe Anzahl von Bauteilen. Alternativ gibt es eine Möglichkeit, zunächst eine Eindeckwanne auf dem Dach zu befestigen und anschließend den Solarkollektor in der Eindeckwanne zu montieren. Aufgrund ihrer Größe stellen Eindeckwannen logistisch jedoch ein Problem dar.

### Aufgabenstellung

Es ist eine Aufgabe der Erfindung, eine verbesserte Dachintegrationseinrichtung sowie ein verbessertes Verfahren zum Montieren eines Solarkollektors in einem Dach anzugeben. Hierbei soll die Dachintegrationseinrichtung vergleichsweise einfach aufgebaut und vergleichsweise schnell montierbar sein. Insbesondere soll eine Anzahl von Bauteilen für die Dachintegrationseinrichtung vergleichsweise klein sein, ohne dass man aufgrund einer Größe der Bauteile ein logistisches Problem zu bekommt. Des Weiteren ist es eine Aufgabe der Erfindung, einen verbesserten Solarkollektor und/oder eine verbesserte Solarkollektoranlage zur Wärmeerzeugung oder Stromerzeugung anzugeben.

### Offenbarung der Erfindung

Die Aufgabe der Erfindung ist mittels einer Solarkollektor-Dachintegrationseinrichtung für eine Montage eines thermischen oder elektrischen Solarkollektors in einem Dach, durch ein Verfahren zum Montieren eines thermischen oder elektrischen Solarkollektors in einem Dach mit Hilfe eines Eindeckrahmens, und einem Solarkollektor oder einer Solarkollektoranlage zur Wärmeerzeugung oder Stromerzeugung, gemäß den unabhängigen Ansprüchen gelöst. - Vorteilhafte Weiterbildungen, zusätzliche Merkmale und/oder Vorteile der Erfindung ergeben sich aus den abhängigen Ansprüchen und der folgenden Beschreibung.

Die erfindungsgemäße Solarkollektor-Dachintegrationseinrichtung umfasst wenigstens ein Eindeckbauteil und wenigstens ein Seiteneindeckbauteil, welche derart ausgebildet sind, dass bei einer Montage der Solarkollektor-Dachintegrationseinrichtung im Dach, ein Längsendabschnitt des Eindeckbauteils und ein Längsendabschnitt des Seiteneindeckbauteils einen Eckenbereich eines Eindeckrahmens definieren, wobei das Eindeckbauteil und das Seiteneindeckbauteil mittels eines Eckverbinders im Eckenbereich des Eindeckrahmens mechanisch gekoppelt miteinander verbindbar sind. Im Folgenden wird die SolarkollektorDachintegrationseinrichtung nur noch als Dachintegrationseinrichtung bezeichnet.

Hierbei, also der Montage der Dachintegrationseinrichtung im Dach, können das Eindeckbauteil und das Seiteneindeckbauteil vollständig, teilweise oder nicht überlappend angeordnet sein. D. h. im letzteren Fall überbückt der Eckverbinder einen Freiraum zwischen einem Längsende des Eindeckbauteils und einem Längsende des Seiteneindeckbauteils. In den beiden ersteren Fällen liegt entweder das Seiteneindeckbauteil auf dem Eindeckbauteil oder das Eindeckbauteil auf dem Seiteneindeckbauteil auf. Ferner steht hierbei eine Längserstreckung des Eindeckbauteils bevorzugt im Wesentlichen senkrecht auf einer Längserstreckung des Seiteneindeckbauteils.

Kommt lediglich ein einziges Eindeckbauteil und lediglich ein einziges Seiteneindeckbauteil zur Anwendung, so sind diese bevorzugt L-förmig ausgebildet. - Insbesondere kommen zwei bevorzugt im Wesentlichen I-förmig ausgebildete Eindeckbauteile und zwei bevorzugt im Wesentlichen I-förmig ausgebildete Seiteneindeckbauteile für eine einzelne Dachintegrationseinrichtung zur Anwendung (siehe unten). Eine einzelne erfindungsgemäße Dachintegrationseinrichtung eignet sich dabei für ein einzelnes Kollektormodul (Solarkollektor) einer Solarkollektoranlage oder auch für eine Mehrzahl von Kollektormodulen eines Solarkollektors einer Solarkollektoranlage.

In Ausführungsbeispielen sind das Eindeckbauteil und das Seiteneindeckbauteil mittels des Eckverbinders mechanisch gekoppelt derart miteinander verbindbar, dass der Eindeckrahmen im Dach geometrisch ausrichtbar ist. Hierbei ist der aus dem wenigstens einen Eindeckbauteil und dem wenigstens einen Seiteneindeckbauteil im Dach konstituierbare Eindeckrahmen auch parallelogrammartig im Dach ausrichtbar, wobei das Eindeckbauteil (bevorzugt bei Dachlatten) oder das Seiteneindeckbauteil im Dach, an einem sogenannten Dachanbindungsbereich, z. B. auf einer Dachlatte oder einem Dachstuhl, befestigbar ist. Hierbei kann in einem anderen Eckenbereich des Eindeckrahmens ebenfalls ein Eckverbinder oder z. B. ein Gelenk oder ein Scharnier vorgesehen sein.

In Ausführungsbeispielen weist die Dachintegrationseinrichtung zwei Eindeckbauteile, zwei Seiteneindeckbauteile, und eine Mehrzahl von, insbesondere vier, Eckverbindern auf. In Ausführungsbeispielen kann die Dachintegrationseinrichtung derart ausgebildet sein, dass ein unteres Eindeckbauteil an/auf einem Dachanbindungsbereich fixierbar ist, die zwei Seiteneindeckbauteile rechts und links auf dem unteren Eindeckbauteil platzierbar sind und ein oberes Eindeckbauteil auf den zwei Seiteneindeckbauteilen platzierbar ist.

Hierbei ist zunächst das untere Eindeckbauteil am Dachanbindungsbereich, z. B. auf einer Dachlatte oder dem Dachstuhl, ausrichtbar und in einem zeitlichen Anschluss daran direkt fixierbar. Bevorzugt sind in einem zeitlichen Anschluss ein linkes Seiteneindeckbauteil mit dessen unterem Längsendabschnitt auf einem linken Längsendabschnitt des Eindeckbauteils und ein rechtes Seiteneindeckbauteil mit dessen unterem Längsendabschnitt auf einem rechten Längsendabschnitt des unteren Eindeckbauteils platzierbar, bzw. vice versa. Eine direkte Befestigung der Seiteneindeckbauteile an einem Dachanbindungsbereich, z. B. auf einer Dachlatte oder dem Dachstuhl, erfolgt dabei bevorzugt nicht. In einem zeitlichen Anschluss ist das obere Eindeckbauteil mit seinem linken und seinem rechten Längsendabschnitt auf den oberen Längsendabschnitten der beiden Seiteneindeckbauteile platzierbar. Eine direkte Befestigung des oberen Eindeckbauteils an einem Dachanbindungsbereich, z. B. auf einer Dachlatte oder dem Dachstuhl, erfolgt dabei bevorzugt ebenfalls nicht.

Die Dachintegrationseinrichtung kann derart ausgebildet sein, dass mittels vier Eckverbindern die zwei Eindeckbauteile mit den zwei Seiteneindeckbauteilen mechanisch koppelbar sind. Die Eckverbinder sind dabei in den vier Eckenbereichen zwischen den zwei Eindeckbauteilen und den zwei Seiteneindeckbauteilen bevorzugt auf die Eindeckbauteile und die Seiteneindeckbauteile aufsteckbar oder einsteckbar. - Mittels einer einfachen Montagehilfe, z. B. einem Fadenkreuz beispielsweise in einer Schnittstelle der Dachintegrationseinrichtung, z. B. einem hydraulischen Anschluss, ist der Eindeckrahmen bzw. die Dachintegrationseinrichtung im Dach ausrichtbar.

In Ausführungsbeispielen kann die Dachintegrationseinrichtung derart ausgebildet sein, dass beim Ausrichten des Eindeckrahmens im Dach, ein jeweiliges Seiteneindeckbauteil gegenüber dem betreffenden Eindeckbauteil, und/oder ein jeweiliger Eckverbinder gegenüber dem betreffenden Seiteneindeckbauteil und/oder dem betreffenden Eindeckbauteil bewegbar ist. D. h. gemäß der Erfindung ist zeitlich nach der Fixierung des unteren Eindeckbauteils und zeitlich nach dem Platzieren der beiden Seiteneindeckbauteile, des oberen Eindeckbauteils und der Eckverbinder, der Eindeckrahmen in einem gewissen Bereich beweglich im Dach montiert. Hierbei ist der Eindeckrahmen ggf. parallelogrammartig im Dach bewegbar, wobei das untere Eindeckbauteil im Dach bereits fixiert ist. D. h. der Eindeckrahmen kann beim Ausrichten eine gewisse Schwenkbewegung im offenen Dach ausführen.

Ein Eckverbinder kann einen Anbindungsabschnitt für eine Festlegung des Eckverbinders an/auf einem Dachanbindungsbereich aufweisen. Mit geeigneten Befestigungsmitteln, wie z. B. Schrauben etc., und mit Hilfe der Eckverbinder ist der Eindeckrahmen bzw. die Dachintegrationseinrichtung im Dach (Dachanbindungsbereich, Dachlatte, Dachstuhl, etc.) befestigbar. Hierbei weisen bevorzugt sämtliche Eckverbinder einen solchen Anbindungsabschnitt für einen Dachanbindungsbereich auf. - Bevorzugt weist ein Eckverbinder ferner eine Sicherungseinrichtung für eine mechanische Sicherung des Solarkollektors an/in der Dachintegrationseinrichtung auf.

Ein Eckverbinder kann eine Schnittstelle für einen hydraulischen Anschluss eines Solarkollektors aufweisen. Bevorzugt weisen wenigstens zwei der Eckverbinder einer einzelnen Dachintegrationseinrichtung jeweils eine Schnittstelle auf, wodurch eine spätere Montage des Kollektormoduls (Solarkollektor) oder des Solarkollektors (Mehrzahl von Kollektormodulen) vereinfacht ist. Es ist natürlich möglich, in sämtlichen Eckverbindern Schnittstellen vorzusehen. Mittels der hydraulischen Anschlüsse der Dachintegrationseinrichtung ist der im Eindeckrahmen montierbare Solarkollektor an eine Solarkollektoranlage hydraulisch anschließbar.

In Ausführungsbeispielen kann das Seiteneindeckbauteil in einem Mittenabschnitt im Wesentlichen ein U-förmiges Profil aufweisen. Ferner kann das U-förmige Profil des Seiteneindeckbauteils einen langen und einen kurzen Schenkel besitzen. Darüber hinaus kann das Eindeckbauteil in einem wesentlichen Mittenabschnitt im Wesentlichen ein L-förmiges Profil aufweisen. Des Weiteren kann das untere Eindeckbauteil eine Bleischürze für einen Übergang zu den Dachsteinen aufweisen.

In Ausführungsbeispielen können das untere Eindeckbauteil und das obere Eindeckbauteil im Wesentlichen gleich ausgebildet sein. Analog dazu können das rechte Seiteneindeckbauteil und das linke Seiteneindeckbauteil im Wesentlichen gleich ausgebildet sein. Ferner können wenigstens zwei oder sämtliche Eckverbinder im Wesentlichen gleich ausgebildet sein. Und darüber hinaus kann die Sicherungseinrichtung zur Sicherung des Solarkollektors als eine Bohrung im betreffenden Eckverbinder ausgebildet sein.

Bei dem erfindungsgemäßen Verfahren zum Montieren eines Solarkollektors in einem Dach mit Hilfe eines Eindeckrahmens, wird in einem ersten Schritt der Eindeckrahmen im Dach platziert, in einem zweiten Schritt der Eindeckrahmen im Dach ausgerichtet und in einem dritten Schritt der Eindeckrahmen im Dach befestigt. - Im ersten Schritt kann der Eindeckrahmen lediglich an einer Seite im Dach fixiert werden. Im zweiten Schritt kann der Eindeckrahmen für seine Ausrichtung im Dach verschwenkbar sein bzw. verschwenkt werden. Im dritten Schritt kann der Eindeckrahmen in seinen Eckenbereichen im Dach befestigt werden.

Für das Ausrichten des Eindeckrahmens kann ein jeweiliges Eindeckbauteil gegenüber einem betreffenden Eckverbinder verlagerbar sein. Ferner kann für das Ausrichten des Eindeckrahmens ein jeweiliges Seiteneindeckbauteil gegenüber einem betreffenden Eckverbinder verlagerbar sein. Hierbei ist bevorzugt eine translatorische und/oder eine rotatorische Verlagerbarkeit in einer Ebene im Wesentlichen parallel zum Dach zwischen den betreffenden Bauteilen eingerichtet. - In einem vierten Schritt kann ein Solarkollektor in den Eindeckrahmen eingesetzt oder eingeschwenkt werden, wobei ein im Wesentlichen translatorisches Einsetzten, im Wesentlichen parallel zum Dach bevorzugt ist. In einem fünften Schritt kann der Solarkollektor am/im Eindeckrahmen ggf. zusätzlich gesichert werden.

Gemäß der Erfindung kann der Eindeckrahmen ein unteres Eindeckbauteil, ein oberes Eindeckbauteil, zwei Seiteneindeckbauteile und vier Eckverbinder aufweisen. Für das Platzieren des Eindeckrahmens im Dach kann zunächst das untere Eindeckbauteil im Dach fixiert, die zwei Seiteneindeckbauteile auf dem unteren Eindeckbauteil im Dach platziert, das obere Eindeckbauteil auf oder unter den zwei Seiteneindeckbauteilen im Dach platziert und die vier Eckverbinder in den Eckenbereichen des Eindeckrahmens auf das betreffende Eindeckbauteil und das betreffende Seiteneindeckbauteil aufgesteckt werden.

Der Eindeckrahmen kann als ein Eindeckrahmen einer erfindungsgemäßen Dachintegrationseinrichtung ausgebildet sein. Ferner kann der Eindeckrahmen in seiner Umfangsrichtung im Wesentlichen vollständig geschlossen sein. - Der erfindungsgemäße Solarkollektor oder die erfindungsgemäße Solarkollektoranlage kann eine erfindungsgemäße Dachintegrationseinrichtung aufweisen. Ferner kann der erfindungsgemäße Solarkollektor oder ein Solarkollektor der erfindungsgemäßen Solarkollektoranlage durch ein erfindungsgemäßes Verfahren montiert werden oder montiert sein.

Gemäß der Erfindung ergibt sich eine erhöhe Montagefreundlichkeit, und mit einer zusätzlichen Variante einer Dachintegrationseinrichtung ergibt sich ein erhöhter Gesamtanteil von Montageeinrichtungen für Indach-Solarkollektoren, was eine erhöhte Flexibilität für Dachmontagen ergibt. Ferner verringern sich gemäß der Erfindung Kosten gegenüber vergleichbaren, herkömmlichen Dachintegrationseinrichtungen, wobei sowohl eine Teileanzahl (Stand der Technik: größer als 25, Erfindung: acht; beides ohne unmittelbare Befestigungsmittel, wie z. B.

Schrauben) und eine Teilekomplexität, sowie eine Montagezeit bzw. ein Montageaufwand (verbesserte Handhabung, reduzierte Montageschritte, andere Montagereihenfolge, Verzicht auf eine direkte Befestigung des Solarkollektors im Dach) sinkt. Darüber hinaus kann gemäß der Erfindung der Solarkollektor in den Eindeckrahmen eingelegt werden, was einen hydraulischen Anschluss oben und unten ermöglicht. Ferner ist der Solarkollektor vergleichsweise einfach im Eindeckrahmen positionierbar.

### Kurzbeschreibung der Zeichnung

Die Erfindung ist im Folgenden anhand von Ausführungsbeispielen unter Bezugnahme auf die beigefügte nicht maßstabsgetreue Zeichnung näher erläutert. Elemente oder Bauteile, welche eine identische, univoke oder analoge Ausbildung und/oder Funktion besitzen, sind in der Figurenbeschreibung mit denselben Bezugszeichen versehen und/oder in den Figuren (Fig.) der Zeichnung mit denselben Bezugszeichen gekennzeichnet. Sämtliche erläuterten Merkmale sind nicht nur in der angegebenen Kombination bzw. den angegebenen Kombinationen, sondern auch in einer anderen Kombination bzw. anderen Kombinationen oder in Alleinstellung anwendbar. - In den Fig. der Zeichnung zeigen:
- Fig. 1: in einer Perspektivansicht ein auf einer Dachlatte montiertes, linksseitig weggebrochen dargestelltes, unteres Eindeckbauteil einer Ausführungsform einer erfindungsgemäßen Dachintegrationseinrichtung für einen Solarkollektor einer erfindungsgemäßen Solarkollektoranlage;
- Fig. 2: in einer analogen und auf der Fig. 1 aufbauenden Darstellung, ferner ein auf dem unteren Eindeckbauteil der Fig. 1 aufgelegtes, oben weggebrochen dargestelltes, rechtes Seiteneindeckbauteil der erfindungsgemäßen Dachintegrationseinrichtung;
- Fig. 3: in einer analogen und auf der Fig. 2 aufbauenden Darstellung, ferner einen zwischen dem unteren Eindeckbauteil und dem rechten Seiteneindeckbauteil der Fig. 1 vorgesehenen Eckverbinder der erfindungsgemäßen Dachintegrationseinrichtung;
- Fig. 4: in einer analogen und auf der Fig. 3 aufbauenden Darstellung, die links und oben weggebrochen dargestellte Dachintegrationseinrichtung der Fig. 3, wobei ein Solarkollektor auf/in der Dachintegrationseinrichtung montiert ist; und
- Fig. 5: eine perspektivische Schnittdarstellung eines Eckbereichs der erfindungsgemäßen Dachintegrationseinrichtung mit darauf bzw. darin montiertem Solarkollektor;

### Ausführungsbeispiele der Erfindung

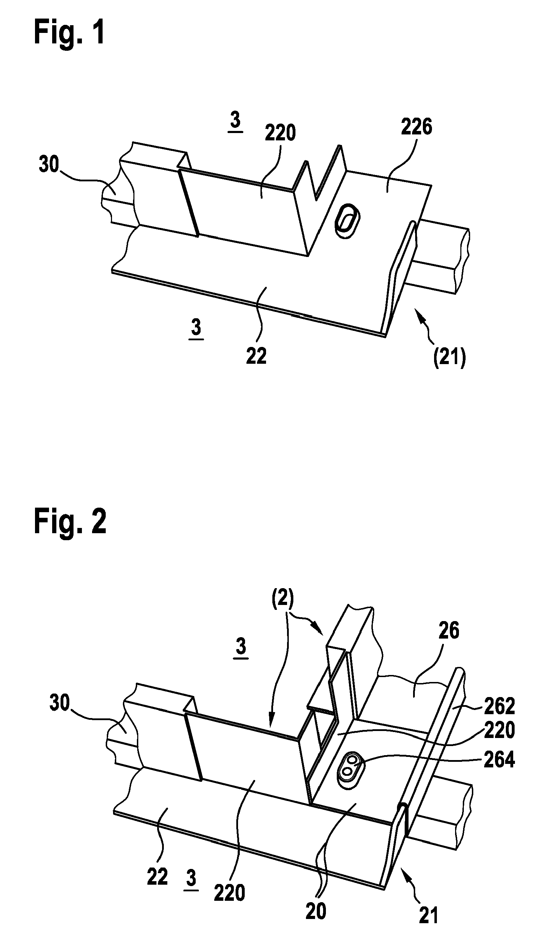

Die Erfindung (siehe Fig. 1 bis 5) ist im Folgenden anhand von Ausführungsbeispielen einer Ausführungsform einer Solarkollektor-Dachintegrationseinrichtung 2, nachfolgend lediglich als Dachintegrationseinrichtung 2 bezeichnet, für eine thermische und/oder elektrische Solarkollektoranlage 0 in Verbindung mit einem Verfahren zum Montieren eines bevorzugt flachen thermischen oder elektrischen Solarkollektors 1/10 in einem Dach 3 mit Hilfe eines Eindeckrahmens 20 der Dachintegrationseinrichtung 2 näher erläutert. Die Dachintegrationseinrichtung 2 fungiert dabei als eine Montageeinrichtung 2 für einen Solarkollektor 1/10 auf/in dem Dach 3.

Die Erfindung ist jedoch nicht auf eine solche Ausführungsform oder die erläuterten Ausführungsbeispiele beschränkt, sondern ist von grundlegenderer Natur, sodass sie auf eine Vielzahl von Dachintegrationseinrichtungen im Sinne der Erfindung angewendet werden kann, wobei ein Solarkollektor 1/10 wenigstens ein Kollektormodul 10 mit wenigstens einer thermischen und/oder elektrischen Kollektoreinheit aufweist. - Obwohl die Erfindung im Detail durch bevorzugte Ausführungsbeispiele näher beschrieben und illustriert ist, so ist die Erfindung nicht durch diese offenbarten Beispiele eingeschränkt. Andere Variationen können hieraus abgeleitet werden ohne den Schutzumfang der Erfindung zu verlassen.

Die Fig. 1 zeigt ein geöffnetes Dach 3, wobei lediglich ein einziger Dachanbindungsbereich 30 in Form einer rechts und links weggebrochen dargestellten Dachlatte 30 dargestellt ist (vgl. auch die Fig. 1 bis 4). - Für das Einrichten der Dachintegrationseinrichtung 2 wird zunächst ein unteres Eindeckbauteil 22 auf der Dachlatte 30 ausgerichtet und befestigt. Vom unteren Eindeckbauteil 22 ist in den Fig. 1 bis 4 lediglich ein rechter Längsendbereich dargestellt, weiter links ist das untere Eindeckbauteil 22 weggebrochen dargestellt. Ferner ist eine sich unten an das untere Eindeckbauteil 22 anschließende Bleischürze für einen Anschluss zu den Dachsteinen in der Zeichnung nicht dargestellt.

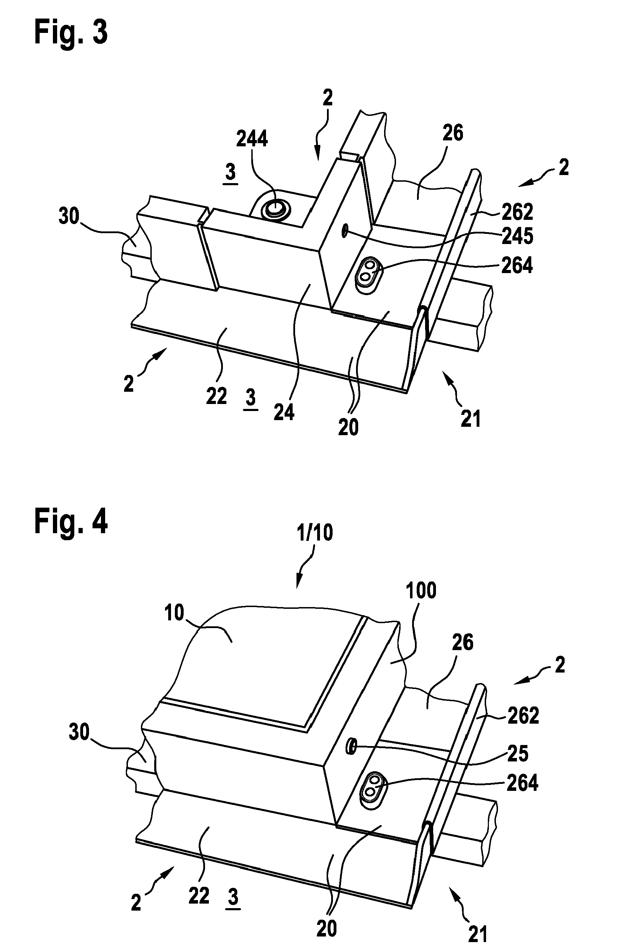

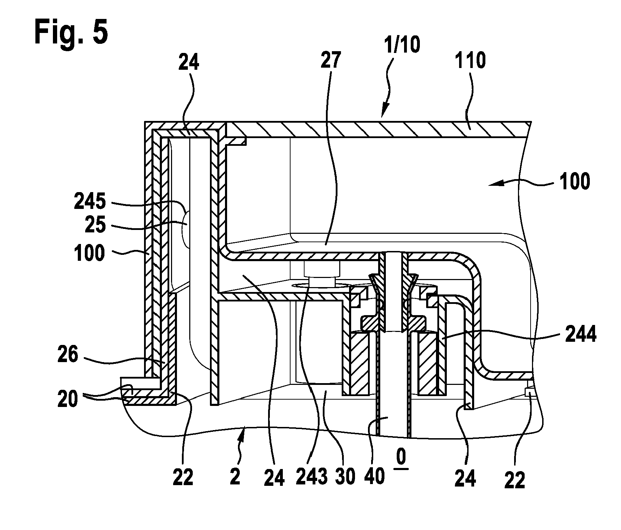

Das untere Eindeckbauteil 22 erstreckt sich bevorzugt im Wesentlichen über eine gesamte Länge des später zu montierenden Solarkollektors 1/10 hinweg (vgl. Fig. 4 und 5, innen in einem Kollektorgehäuse 100 des Solarkollektors 1/10). Das untere Eindeckbauteil 22 ist hierfür über einen in Bezug auf dessen Längsendabschnitt vergleichsweise langgestreckten Mittenabschnitt, also einer Längsrichtung des unteren Eindeckbauteils 22, in einem Querschnitt L-förmig ausgebildet, welcher es mit einem vom Dach 3 wegstehenden Schenkel ermöglicht, den Solarkollektor 1/10 bzw. das Kollektorgehäuse 100 am/im späteren Eindeckrahmen 20 zu montieren.

Das untere Eindeckbauteil 22 konstituiert mit seinem linken Längsendabschnitt (nicht dargestellt) und seinem rechten Längsendabschnitt (Fig. 1 bis 4) jeweils zusammen mit einem später zu montierenden Seiteneindeckbauteil 26 zwei untere Eckenbereiche 21 des Eindeckrahmens 20. Im jeweiligen unteren Eckenbereich 21 sind die auf dem linken und rechten Längsendabschnitt des unteren Eindeckbauteils 22 zu montierenden unteren Längsendabschnitte der Seiteneindeckbauteile 26 (vgl. die Fig. 2 bis 5), im Wesentlichen in einer Dachebene im Wesentlichen translatorisch und etwas rotatorisch bewegbar, um den Eindeckrahmen 20 im Dach 3 auszurichten. - Dies trifft analog auf ein oberes Eindeckbauteil 22 zu, welches in der Zeichnung nicht dargestellt ist.

Die folgenden Ausführungen betreffen nur noch den rechten unteren Eckenbereich 21 der Dachintegrationseinrichtung 2, wobei diese Ausführungen analog auf den linken unteren Eckenbereich 21 anwendbar sind. - Ferner sind die obigen und die folgenden Ausführungen analog auf die beiden oberen Eckenbereiche 21 des Eindeckrahmens 20 anwendbar, wobei bei den beiden oberen Eckenbereichen 21 ein oberes Eindeckbauteil 22 bevorzugt auf den oberen Längsendabschnitten der Seiteneindeckbauteile 26 platziert wird. Eine Platzierung darunter, z. B. mittels Übergreifungen zum Festhalten des oberes Eindeckbauteil 22, ist natürlich anwendbar.

Für eine Ausrichtbewegung des Eindeckrahmens 20 im Dach 3 weist das untere Eindeckbauteil 22 in seinem rechten Längsendabschnitt, in einer Längsrichtung des rechten Seiteneindeckbauteils 26 verlaufend, einen Aufnahmeabschnitt 226 auf. Analog zum Aufnahmeabschnitt 226 des unteren Eindeckbauteils 22 weist der untere Längsendabschnitt des rechten Seiteneindeckbauteils 26 ebenfalls einen Aufnahmeabschnitt auf. Bevorzugt ist dieser Aufnahmeabschnitt im Wesentlichen ähnlich zum rechten Längsendabschnitt des unteren Eindeckbauteils 22 ausgebildet. Im Aufnahmeabschnitt 226 ist der untere Längsendabschnitt des rechten Seiteneindeckbauteils 26 im Wesentlichen translatorisch verlagerbar und geringfügig rotatorisch verschwenkbar aufnehmbar.

Hierfür sind der Aufnahmeabschnitt 226 bzw. der rechte Längsendabschnitt des unteren Eindeckbauteils 22 und der untere Längsendabschnitt Seiteneindeckbauteils 26, wenn sie übereinander angeordnet sind (vgl. die Fig. 2 bis 4), einander in einer Längsrichtung zumindest teilweise derart komplementär ausgebildet, dass der untere Längsendabschnitt des Seiteneindeckbauteils 26 in Richtung der Längserstreckung des Seiteneindeckbauteils 26, translatorisch gegenüber dem unteren Eindeckbauteil 22 in einem bestimmten Bereich hin- und herbewegbar ist. Eine rotatorische Verlagerbarkeit des Seiteneindeckbauteils 26 gegenüber dem unteren Eindeckbauteil 22 ergibt sich durch die beteiligen Toleranzen.

Zeitlich nach einer Montage des unteren Eindeckbauteils 22 auf der Dachlatte 30, werden die Seiteneindeckbauteile 26 links und rechts auf die betreffenden Dachlatten des Dachs 3 und das untere Eindeckbauteil 22 gelegt und noch nicht befestigt (vgl. Fig. 2). Hierbei überlappt das betreffende Seiteneindeckbauteil 26 das untere Eindeckbauteil 22 bevorzugt. Ferner wird das obere Eindeckbauteil 22 montiert, wobei das obere Eindeckbauteil 22 die Seiteneindeckbauteile 26 bevorzugt oben überlappt. Der Eindeckrahmen 20 besitzt dadurch seine vorläufige Form, wobei die beiden Eindeckbauteile 22 und die beiden Seiteneindeckbauteile 26 bevorzugt mechanisch noch nicht derart verbunden sind, dass sie einfach gemeinsam ausgerichtet werden können (siehe unten, dies ist bevorzugt erst mit den Eckverbindern 24 möglich).

Ein einzelnes Seiteneindeckbauteil 26 ist bevorzugt über einen in Bezug auf dessen Längsendabschnitt vergleichsweise langgestreckten Mittenabschnitt, also seiner Längsrichtung, in einem Querschnitt U-förmig ausgebildet. Hierbei bildet ein bevorzugt kürzerer vom Dach 3 wegstehender Schenkel einen außen an der Dachintegrationseinrichtung 2 verlaufenden Stehfalz 262 für eine verbesserte Wasserführung. Es ist ferner möglich, das (Seiten-)Eindeckbauteil 26 u-förmig auszulegen und an beiden Schenkeln eine Schnittstelle zum Solarkollektor 1/10 vorzusehen. Somit wäre es möglich, eine Dachintegration für zwei Solarkollektoren 1/10 einzusetzen. Hierdurch ergeben sich zwei Seiteneindeckbauteile 26 und ein mittleres Eindeckbauteil (26). Darüber hinaus ermöglicht es ein bevorzugt längerer vom Dach 3 wegstehender innerer Schenkel des Seiteneindeckbauteils 26, den Solarkollektor 1/10 bzw. das Kollektorgehäuse 100 am/im Eindeckrahmen 20 zu montieren.

Ferner kann das Seiteneindeckbauteil 26 einen zusätzlichen Anbindebereich 264 zum Dachanbindungsbereich 30 aufweisen, wobei das darunter liegende untere Eindeckbauteil 22 in diesem Bereich bevorzugt ausgenommen ist (vgl. Fig. 1).

Der Anbindebereich 264 ist z. B. für ein in der Dachlatte 30 zu verankerndes Befestigungsmittel, wie z. B. eine Schraube oder einen Nagel, geeignet. Hierbei ist es bevorzugt, dass der Anbindebereich 264 wenigstens eine Durchgangsausnehmung im unteren Längsendabschnitt des Seiteneindeckbauteils 26 aufweist. Bevorzugt ist der Anbindebereich 264 gegenüber einem Boden im unteren Längsendabschnitt des Seiteneindeckbauteils 26 und gegenüber der Dachlatte 30 erhaben, wobei in dieser Erhebung (264), dann die wenigstens eine Durchgangsausnehmung vorgesehen ist. Dies dient wiederum einer verbesserten Wasserführung, damit im Normalfall kein Wasser zwischen der Durchgangsausnehmung und dem Befestigungsmittel an die Dachlatte 30 gelangen kann.

In einem folgenden, in der Fig. 3 dargestellten Schritt, werden die Eckverbinder 24 in den Eckenbereichen 21 des Eindeckrahmens 20 auf die gegenseitig einander betreffenden Bauteile, also die Eindeckbauteil-Seiteneindeckbauteil-Teilpaare 22, 26 aufgesteckt, wobei das untere/obere Eindeckbauteil 22 und das betreffende linke/rechte Seiteneindeckbauteil 26 jeweils in einem im Wesentlichen rechten Winkel zueinander angeordnet sind. Hierbei kommen bevorzugt vier Eckverbinder 24 zur Anwendung. Je nach einer Ausgestaltung eines Eindeckbauteils 22 und/oder eines Seiteneindeckbauteils 26 können auch weniger als vier Eckverbinder 24 je Solarkollektor 1/10 zur Anwendung gelangen. Ferner ist es möglich, die Eckverbinder 24 nicht aufsteckbar sondern in die EindeckbauteilSeiteneindeckbauteil-Teilpaare 22, 26 einsteckbar zu gestalten.

Darüber hinaus umfasst wenigstens ein, bevorzugt umfassen zwei Eckverbinder 24 je Dachintegrationseinrichtung 2 eine Schnittstelle 244 für eine hydraulische Anbindung des Solarkollektors 1/10 an die Solarkollektoranlage 0 (vgl. Fig. 5), wobei die Schnittstelle 244 eine Hydraulikleitung 40 der Solarkollektoranlage 0 aufnehmen kann (vgl. Fig. 5) oder selbst als eine hydraulische Schnittstelle 244 ausgebildet sein kann (nicht dargestellt). Hierdurch ist eine spätere Montage des Solarkollektors 1/10 vereinfacht, da ein hydraulischer Anschluss des Solarkollektors 1/10 bei der Schnittstelle 244 eines Eckverbinders 24 angreift und nicht weiter gesichert werden muss (Schnellsteckanschluss-Prinzip). Es ist natürlich möglich, sämtliche Eckverbinder 24 der Dachintegrationseinrichtung 2 mit Schnittstellen 244 zu versehen.

Für eine Montage des Solarkollektors 1/10 an/in dem Eindeckrahmen 20 der Dachintegrationseinrichtung 2 muss der Eindeckrahmen 20 bzw. müssen die Bauteile des Eindeckrahmens 20 (zwei Eindeckbauteile 22, zwei Seiteneindeckbauteile 26 und vier Eckverbinder 24) untereinander ausgerichtet sein. Dies kann z. B. mittels einer einfachen Montagehilfe, wie z. B. einem Fadenkreuz, erfolgen, mittels welchem diese Bauteile im Wesentlichen gleichzeitig im Dach 3 ausgerichtet werden können. Hierbei kann sich das Fadenkreuz z. B. an/in einer Schnittstelle eines Eckverbinders 24, wie beispielsweise der betreffenden Schnittstelle 244 für die Hydraulik orientieren. Alternativ kann das Fadenkreuz mittels eines Zentrierstifts in einem Anbindungsabschnitt 243 (siehe unten) fixiert werden, wodurch die hydraulische Verbindung nicht beschädigt werden kann. In einem zeitlichen Anschluss daran wird der Eindeckrahmen 20 zentral in den Eckverbindern 24 am jeweils betreffenden Dachanbindungsbereich 30 (z. B. eine betreffende Dachlatte 30) bzw. dem Dachstuhl 30 befestigt.

Hierfür weist bevorzugt ein jeder Eckverbinder 24 einen Anbindungsabschnitt 243 für eine Festlegung des Eckverbinders 24 am betreffenden Dachanbindungsbereich 30 auf. Durch einen solchen Anbindungsabschnitt 243 ist z. B. ein Befestigungsmittel, insbesondere eine Schraube, im Dachanbindungsbereich 30 verankerbar. Hierdurch ist dann auch der Eindeckrahmen 20, die Dachintegrationseinrichtung 2 und schließlich der Solarkollektor 1/10 (ggf. über weitere Sicherungselemente 25, siehe unten) an den Dachanbindungsbereichen 30 festlegbar.

Ferner kann ein Anbindebereich 143 des Solarkollektors 1/10 am/im Anbindungsabschnitt 243 des Eckverbinders 24 oder dessen Befestigungsmittel angreifen und den Solarkollektor 1/10 an/in der Dachintegrationseinrichtung 2 sichern (nicht dargestellt). Hierbei können die Sicherungselemente 25 ggf. entfallen. Eine anderweitige Anbindung des Solarkollektors 1/10 an den Eindeckrahmen 20, z. B. mittels einer Verstiftung (siehe unten, Sicherungselemente 25), einer Verrastung (Steckverbindung), einer Verschraubung etc. ist natürlich anwendbar.

Bei einer Anordnung der (hydraulischen) Schnittstellen 244 im Dach 3 aufgrund einer Konfiguration des Solarkollektors 1/10 bzw. der Solarkollektoranlage 0 ist es bevorzugt, dass eine Schnittstelle 244 unten und eine Schnittstelle 244 oben im Dach 3 vorgesehen ist, wobei diese beiden Schnittstellen 244 bevorzugt diagonal zueinander angeordnet sind. Andere Anordnungen sind natürlich je nach Solarkollektor 1/10 realisierbar. Bei der Montage des Solarkollektors 1/10 richten sich dann beide Hydraulikverbindungen ein, wobei es bevorzugt ist, dass eine große Seitenfläche des Solarkollektors 1/10 im Wesentlichen parallel zur Dachfläche bewegt wird. - Bei einem elektrischen Solarkollektor 1/10 können die (hydraulischen) Schnittstellen 244 natürlich entfallen bzw. andersartig ausgestaltet sein.

Wenn die Dachintegrationseinrichtung 2 mittels der Befestigungsmittel in den Anbindungsabschnitten 243 des Eindeckrahmens 20 befestigt ist, so kann der Solarkollektor 1/10 auf/in dem Eindeckrahmen 20 bzw. der Dachintegrationseinrichtung 2 montiert werden. Hierbei, siehe auch die Fig. 4 und 5, übergreift ein umlaufender Außenabschnitt des Kollektorgehäuses 100 bevorzugt die zwei Eindeckbauteile 22, die zwei Seiteneindeckbauteile 26 und die vier Eckverbinder 24, sodass ein geschlossenes äußeres Erscheinungsbild entsteht. Eine eigentliche Kollektoreinheit des Solarkollektors 1/10 ist dabei im Eindeckrahmen 20 zwischen den zwei Eindeckbauteilen 22, den zwei Seiteneindeckbauteilen 26 und den vier Eckverbindern 24 aufgenommen.

Ist der Solarkollektor 1/10 montiert, so kann der Solarkollektor 1/10 mit Sicherungselementen 25, bevorzugt Sicherungsstiften 25, am Eindeckrahmen 20 dauerhaft befestigt werden. Hierbei durchgreifen die Sicherungselemente 25 den oben genannten Außenabschnitt des Kollektorgehäuses 100 und greifen in den Eindeckrahmen 20, bevorzugt in dessen Eckverbindern 24 ein (vgl. die Fig. 4 und 5). Bevorzugt sind dabei die betreffenden Eindeckbauteile 22 und die betreffenden Seiteneindeckbauteile 26 in ihren Schürzen 220, 260 (siehe unten) entsprechend ausgenommen, sodass das Sicherungselement 25 im Wesentlichen vollständig durch den Eckverbinder 24 hindurchgreifen kann (nicht dargestellt). Hierdurch sind Verkehrslasten, wie Wind und Schnee, auf den Dachstuhl 30 übertragbar.

Ein Eckverbinder 24 weist in Ausführungsbeispielen (siehe die Fig. 3) bevorzugt im Wesentlichen gleich lange und in einem im Wesentlichen rechten Winkel angeordnete Schenkel auf, wobei ein Querschnitt der Schenkel U-förmig ausgebildet ist. D. h. von einer Unterseite aus betrachtet (vom Dachstuhl 30 in Richtung Himmel) ist ein Eckverbinder 24 als ein beidseitig offener Kanal ausgestaltet, der einen 90°-Knick besitzt. Eine Sicherungseinrichtung 245, bevorzugt eine Durchgangsbohrung 245 für das Sicherungselement 25, ist durch den Eckverbinder 24 bevorzugt hindurchgehend vorgesehen.

Im Wesentlichen analog zu einem angrenzenden Querschnitt eines Eckverbinders 24 ist ein betreffender "Schenkel" des Eindeckbauteils 22 und/oder des Seiteneindeckbauteils 26 ausgebildet. Gemäß obigem Ausführungsbeispiel weist dieser betreffende Schenkel selbst wieder eine U-Form auf, wobei die beiden Schenkel dieses betreffenden Schenkels des Eindeckbauteils 22 (einfacher Gesamtquerschnitt hier: L-Form) und/oder des Seiteneindeckbauteils 26 (einfacher Gesamtquerschnitt hier: U-Form mit bevorzugt unterschiedlich langen Schenkeln) im Wesentlichen gleich lang oder unterschiedlich lang ausgebildet sein können.

Damit der Eckverbinder 24 mit dem betreffenden Eindeckbauteil 22 bzw. mit dem betreffenden Seiteneindeckbauteil 26 mechanisch gekoppelt werden kann, weist bevorzugt sowohl das Eindeckbauteil 22 als auch das Seiteneindeckbauteil 26 eine entsprechende Schürze 220, 260 als nach innen eingerückte Verlängerung lediglich eines der Schenkel des betreffenden Schenkels auf (vgl. Fig. 1 und 2). Bevorzugt betrifft dies den äußeren Schenkel des betreffenden Schenkels des Eindeckbauteils 22 und des Seiteneindeckbauteils 26.

In einem Ausführungsbeispiel sind die Schürzen 220, 260 derart ausgestaltet, dass sie sich überlappen. Ferner können die Schürzen 220, 260, das Eindeckbauteil 22 und/oder das Seiteneindeckbauteil 26 derart ausgestaltet sein, dass der betreffende Eckverbinder 24 mit einem vergleichsweise geringen Spiel im betreffenden Eckenbereich 21 des Eindeckrahmens 20 sitzt, jedoch ausreichend Spiel in die jeweilige Längsrichtung zum betreffend benachbarten Eindeckbauteil 22 und/oder dem betreffend benachbarten Seiteneindeckbauteil 26 aufweist (vgl. Fig. 3), damit der Eindeckrahmen 21 ausreichend ausgerichtet werden kann.

In der Darstellung der Fig. 5 ist der bevorzugt zentrale Anbindungsabschnitt 243 eines Eckverbinders 24 zur Festlegung des Eckverbinders 24 am Dachanbindungsbereich 30 gut zu erkennen. Ferner zeigt die Fig. 5 die Schnittstelle 244 des Eckverbinders 24 einerseits für den hydraulischen Anschluss des Solarkollektors 1/10 und andererseits für die Hydraulikleitung 40 der Solarkollektoranlage 0, wobei eine hydraulische Schnittstelle der Hydraulikleitung 40 im Eckverbinder 24 schwimmend gelagert ist, um Toleranzen aufzunehmen. Eine bevorzugt zusätzliche Trichterfunktion der hydraulische Schnittstelle (Hydraulikleitung 40) erlaubt es, den Solarkollektor 1/10 besser zu finden (Zentrierung). Darüber hinaus zeigt die Fig. 5, neben anderen Merkmalen, ein in das Kollektorgehäuse 100 eingebettetes Kollektorglas 110.

Gemäß der Erfindung ist es möglich, ein Eindeckbauteil 22 und ein Seiteneindeckbauteil 26 zu einem einzelnen Eindeckbauteil und/oder Seiteneindeckbauteil zusammenzufassen, wobei dieses entstehende Eindeckbauteil oder Seiteneindeckbauteil eine L-förmige Konfiguration besitzt. Hierbei kann ein Gelenk oder Scharnier zwischen den Schenkeln des L-förmigen Eindeckbauteils oder Seiteneindeckbauteils vorgesehen sein, um ein parallelogrammartiges Verschwenken des Eindeckrahmens 30 im Dach 3 zu ermöglichen. - Es ist natürlich möglich, die Dachintegrationseinrichtung 2 und/oder das Verfahren statisch bzw. kinematisch umzukehren, was gegebenenfalls auch nur teilweise erfolgen kann. Ferner ist es möglich, die Dachintegrationseinrichtung 2 in einem Stück (2 x 22 und 2x 26) zu fertigen.

## Patentansprüche

1. Solarkollektor-Dachintegrationseinrichtung (2) für eine Montage eines thermischen oder elektrischen Solarkollektors (1/10) in einem Dach (3), mit
wenigstens einem Eindeckbauteil (22) und wenigstens einem Seiteneindeckbauteil (26), welche derart ausgebildet sind, dass bei einer Montage der Solarkollektor-Dachintegrationseinrichtung (2) im Dach (3),
ein Längsendabschnitt des Eindeckbauteils (22) und ein Längsendabschnitt des Seiteneindeckbauteils (26) einen Eckenbereich (21) eines Eindeckrahmens (20) definieren, **dadurch gekennzeichnet, dass**
das Eindeckbauteil (22) und das Seiteneindeckbauteil (26) mittels eines Eckverbinders (24) im Eckenbereich (21) des Eindeckrahmens (20) mechanisch gekoppelt miteinander verbindbar sind.

2. Solarkollektor-Dachintegrationseinrichtung (2) gemäß vorhergehendem Anspruch, **dadurch gekennzeichnet, dass** das Eindeckbauteil (22) und das Seiteneindeckbauteil (26) mittels des Eckverbinders (24) mechanisch gekoppelt derart miteinander verbindbar sind, dass der Eindeckrahmen (20) im Dach (3) geometrisch ausrichtbar ist.

3. Solarkollektor-Dachintegrationseinrichtung (2) gemäß einem der vorhergehenden Ansprüche, **dadurch gekennzeichnet, dass** die Solarkollektor-Dachintegrationseinrichtung (2) zwei Eindeckbauteile (22), zwei Seiteneindeckbauteile (26), und eine Mehrzahl von, insbesondere vier, Eckverbindern (24) umfasst, und/oder
die Solarkollektor-Dachintegrationseinrichtung (2) derart ausgebildet ist, dass ein unteres Eindeckbauteil (22) an/auf einem Dachanbindungsbereich (30) fixierbar ist, die zwei Seiteneindeckbauteile (26) rechts und links auf dem unteren Eindeckbauteil (22) platzierbar sind und ein oberes Eindeckbauteil (22) auf den zwei Seiteneindeckbauteilen (26) platzierbar ist.

4. Solarkollektor-Dachintegrationseinrichtung (2) gemäß einem der vorhergehenden Ansprüche, **dadurch gekennzeichnet, dass** die Solarkollektor-Dachintegrationseinrichtung (2) derart ausgebildet ist, dass mittels vier Eckverbindern (24) die zwei Eindeckbauteile (22) mit den zwei Seiteneindeckbauteilen (26) mechanisch koppelbar sind.

5. Solarkollektor-Dachintegrationseinrichtung (2) gemäß einem der vorhergehenden Ansprüche, **dadurch gekennzeichnet, dass** die Solarkollektor-Dachintegrationseinrichtung (2) derart ausgebildet ist, dass beim Ausrichten des Eindeckrahmens (20) im Dach (3),
ein jeweiliges Seiteneindeckbauteil (26) gegenüber dem betreffenden Eindeckbauteil (22), und/oder ein jeweiliger Eckverbinder (24) gegenüber dem betreffenden Seiteneindeckbauteil (26) und/oder dem betreffenden Eindeckbauteil (22) bewegbar ist.

6. Solarkollektor-Dachintegrationseinrichtung (2) gemäß einem der vorhergehenden Ansprüche, **dadurch gekennzeichnet, dass**:
• ein Eckverbinder (24) einen Anbindungsabschnitt (243) für eine Festlegung des Eckverbinders (24) an/auf einem Dachanbindungsbereich (30) aufweist;
• ein Eckverbinder (24) eine Schnittstelle (244) für einen hydraulischen Anschluss eines Solarkollektors (1/10) aufweist; und/oder
• ein Eckverbinder (24) eine Sicherungseinrichtung (245) für eine mechanische Sicherung des Solarkollektors (1/10) aufweist.

7. Solarkollektor-Dachintegrationseinrichtung (2) gemäß einem der vorhergehenden Ansprüche, **dadurch gekennzeichnet, dass**:
• das Seiteneindeckbauteil (26) in einem Mittenabschnitt im Wesentlichen ein U-förmiges Profil aufweist;
• das U-förmige Profil des Seiteneindeckbauteils (26) einen langen und einen kurzen Schenkel aufweist;
• das Eindeckbauteil (22) in einem Mittenabschnitt im Wesentlichen ein U-förmiges Profil aufweist;
• das untere Eindeckbauteil (22) und das obere Eindeckbauteil (22) im Wesentlichen gleich ausgebildet sind;
• das rechte Seiteneindeckbauteil (26) und das linke Seiteneindeckbauteil (26) im Wesentlichen gleich ausgebildet sind;
• wenigstens zwei Eckverbinder (24) im Wesentlichen gleich ausgebildet sind; und/oder
• die Sicherungseinrichtung (245) zur Sicherung des Solarkollektors (1/10) als eine Bohrung (245) im Eckverbinders (24) ausgebildet ist.

8. Verfahren zum Montieren eines thermischen oder elektrischen Solarkollektors (1/10) in einem Dach (3) mit Hilfe eines Eindeckrahmens (20), **dadurch gekennzeichnet, dass**
in einem ersten Schritt der Eindeckrahmen (20) im Dach (3) platziert, in einem zweiten Schritt der Eindeckrahmen (20) im Dach (3) ausgerichtet und in einem dritten Schritt der Eindeckrahmen (20) im Dach (3) befestigt wird.

9. Verfahren gemäß vorhergehendem Anspruch, **dadurch gekennzeichnet, dass**:
• im ersten Schritt der Eindeckrahmen (20) lediglich an einer Seite im Dach (3) fixiert wird;
• im zweiten Schritt der Eindeckrahmen (20) für seine Ausrichtung im Dach (3) verschwenkbar ist und/oder verschwenkt wird;
• im dritten Schritt der Eindeckrahmen (20) in seinen Eckenbereichen (21) im Dach (3) befestigt wird;
• in einem vierten Schritt ein Solarkollektor (1/10) in den Eindeckrahmen (20) eingesetzt oder eingeschwenkt wird; und/oder
• in einem fünften Schritt der Solarkollektor (1/10) am/im Eindeckrahmen (20) gesichert wird.

10. Verfahren gemäß einem der vorhergehenden Ansprüche, **dadurch gekennzeichnet, dass** der Eindeckrahmen (20) ein unteres Eindeckbauteil (22), ein oberes Eindeckbauteil (22), zwei Seiteneindeckbauteile (26) und vier Eckverbinder (24) aufweist, wobei für das Platzieren des Eindeckrahmens (20) im Dach (3) bevorzugt
zunächst das untere Eindeckbauteil (22) im Dach (3) fixiert, die zwei Seiteneindeckbauteile (26) auf dem unteren Eindeckbauteil (22) im Dach (3) platziert, das obere Eindeckbauteil (22) an den zwei Seiteneindeckbauteilen (26) im Dach (3) platziert und die vier Eckverbinder (24) in den Eckenbereichen (21) des Eindeckrahmens (20) auf das betreffende Eindeckbauteil (22) und das betreffende Seiteneindeckbauteil (26) aufgesteckt werden.

11. Verfahren gemäß einem der vorhergehenden Ansprüche, **dadurch gekennzeichnet, dass**:
• für das Ausrichten des Eindeckrahmens (20) ein jeweiliges Eindeckbauteil (22) gegenüber einem betreffenden Eckverbinder (24) verlagerbar ist;
• für das Ausrichten des Eindeckrahmens (20) ein jeweiliges Seiteneindeckbauteil (26) gegenüber einem betreffenden Eckverbinder (24) verlagerbar ist;
• der Eindeckrahmen (20) in seiner Umfangsrichtung im Wesentlichen vollständig geschlossen ist;
• der Eindeckrahmen (20) mittels einer Montagehilfe, insbesondere einem Fadenkreuz, im Dach (3) ausrichtbar ist oder ausgerichtet wird; und/oder
• der Eindeckrahmen (20) als ein Eindeckrahmen (20) einer SolarkollektorDachintegrationseinrichtung (2) gemäß einem der vorhergehenden Ansprüche ausgebildet ist.

12. Solarkollektor (1/10) oder Solarkollektoranlage (0) zur Wärmeerzeugung oder Stromerzeugung, **dadurch gekennzeichnet, dass**
der Solarkollektor (1/10) oder die Solarkollektoranlage (0) eine Solarkollektor-Dachintegrationseinrichtung (2) gemäß einem der vorhergehenden Ansprüche aufweist; und/oder
der Solarkollektor (1/10) oder ein Solarkollektor (1/10) der Solarkollektoranlage (0) gemäß einem der vorhergehenden Ansprüche montierbar ist und/oder montiert ist.
